# EUROPEAN PATENT APPLICATION

(11) **EP 4 597 927 A1**
(43) Date of publication of application: **06.08.2025**
(21) Application number: 24305163.8
(22) Date of filing: 30.01.2024
(51) Int. Cl.: H04L 9/32, H04L 9/40

(54) **CERTIFICATE AUTHORITY DELEGATION**

(71) Applicant: THALES DIS FRANCE SAS, 92190 Meudon (FR)
(72) Inventor: BOHER, Teddy, 84300 CAVAILLON (FR)
(74) Representative: Bricks, Amélie

(57) **Abstract**

Certificate authority delegation. A binary for subordinate certificate authority is created. Such a binary may have restricted capability for issuing digital certificates and is created by generating a secret key and associating the secret key with a subordinate certificate authority, creating at least one signature function to digitally sign digital certificates to be issued, and inserting the secret key, the at least one signature function into a subordinate certificate authority binary.

## Description

### BACKGROUND OF THE INVENTION

The present invention relates, generally, to delegation of certificate authority, and, more particularly, to creation of subordinate certificate authorities with restricted certification ability.

Nearly all communication over the Internet is performed over secure communication channels. There are, at least, two aspects to secure communication, namely, *encryption* and *trust.* The first aspect, encryption, ensures that any communication over the secure channel is encoded in such a way that only the intended recipient is able to decrypt messages transmitted over the secure channel, and the second aspect, trust, ensures that the recipient of a message can trust that the sender is who the sender purports to be, and, *vice versa,* that a sender can trust that the recipient of a message is, indeed, who the *recipient* purports to be.

While two nodes can establish an encrypted communication channel, that channel is still not secure unless the two entities can establish that their respective identity, or at least, that an entity whose identity must be relied on is, in fact, who that entity says it is.

Consider an example, a bank customer wishes to engage in online banking with their bank and uses the Internet to *visit* the bank's online banking website. Of course, the customer wants to make sure that information such as account number, password, balances, transaction history, etc. are not disclosed to any nefarious interlopers that may have access to the communication, e.g., someone with a computer through which the communication between the bank customer's computer and the bank's server passes.

Transport Layer Security (TLS) is a protocol for ensuring both *encryption* and *trust* in online communications. In TLS, a client, e.g., a web browser, and a server establish a session key only known to the client and the server. The session key is a symmetric key, i.e., a key that can be used to encrypt a plaintext message and to decrypt the corresponding encrypted message to obtain original plaintext message. The mechanism used in TLS for the client and server to agree on the session key is well-known and outside of the scope of this document.

That said, in TLS, the client and server communicate the session key or parameters for generating the session key using public key infrastructure (PKI). PKI relies on two related features, a key pair, consisting of a public key and a private key, and digital certificates. The former allows for encrypted communication and the latter, establishment of identity that may be trusted.

The key pair provides for *asymmetric encryption,* i.e., cryptography in which one key is used for encryption and a corresponding key, used for decryption. Thus, knowledge of one key only enables one of the two cryptographic operations, not the other. To encrypt a plaintext message, the sender encrypts the message with the public key of the recipient. To recover the plaintext message from the encrypted message, the recipient uses their private key to decrypt the encrypted message.

To assert identity, or more specifically, to verify that a public key belongs to a particular party, the party needing to make that assertion *signs* their public key using their private key. The recipient can verify that the public key has been signed by the corresponding private key using the received public key. However, the recipient also must verify that the keys correspond to the entity that purports to be sending them. To make that possible, the asserting party transmits their *digital certificate.* A digital certificate of a party contains (1) the public key of the party and information about the key, (2) the identity of the owner of key, and (3) a digital signature of an entity that has verified the digital certificate, which typically is a *certificate authority,* an entity that issues digital certificates, as well as the digital certificate of the certificate authority.

Having received a digital certificate, a relying party can rely on digital signatures created using a private key that corresponds to a certified public key. Thus, when a server sends its digital signature to a client, e.g., an end user's web browser, the client can verify the signature as being certified by a trusted certificate authority and can therefore engage in secure communication with the server. The verification process is a chain of verifications of digital certificates from the entity that provided a digital certificate to a *Root Certificate Authority* via any intermediate certificate authorities. At each level of this chain, a digital certificate of an entity is signed by another certificate authority whose digital certificate is then verified until the chain of verification terminates with the Root Certificate Authority, whose certificate is self-signed. The digital certificate of the Root CA is verified by the client against root certificates that the client stores locally.

In the PKI, the issuance of digital certificates may be delegated from a certificate authority to one or more intermediate or *subordinate certificate authority* (Sub CA). A Sub CA is a mechanism to delegate powers, such as issuing digital certificates and digitally signing digital certificates, from the Root Certificate Authority.

A downside of delegation to a Sub CA under the existing schemes is that a Sub CA acquires the same certificate granting powers as those held by the delegating CA. The delegating CA retains only the right of revocation. Consequently, a delegation to a Sub CA implies endorsement of the corresponding secret key, allowing the Sub CA to digitally sign anything on behalf of the root CA. For example, if a root CA belonging to Company AA, delegates digital certificate granting and signing powers to a subordinated CA belonging to a subsidiary company aa of Company AA, the Sub CA for company aa is able to sign digital certificates for a rival company BB, and is even able to sign yet another sub CA for BB, in effect creating a Sub CA under control of company BB with the ability to sign digital certificates on behalf of Company AA. Company AA may not wish to lose control of the certificate granting and digital signature process in that way.

An attempt to constrain this sub CA is by centralizing the Sub CA usage via a central PKI deployment, in charge of enforcing constraints (for example via certificate profiles) on certificate issuance (for example on the content of the Distinguished Name or DN). This design is flawed in several ways; for example, it requires a highly available PKI able to handle properly high throughput of certificate issuance where clients are required to be connected during certificate issuance.

Furthermore, it is possible for a Sub CA to be located outside of the control of an organization associated with the corresponding root CA. For example, if a service company has a webservice under the domain name service.company.com, it may be convenient to delegate the issuance of digital certificates for instances thereof to the service company. This can cause multiple problems including the power of the independent service company Sub CA to issue certificates without authorization from the root CA. Additionally, a root CA may require that cryptographic processes of a Sub CA be performed according to some security policies, e.g., within a hardware security module (HSM). With respect to a Sub CA that is independent from the root CA, the organization associated with the Root CA may not have sufficient control of the independent Sub CA to verify compliance of such security policies.

One attempt to address the foregoing problems has been put forward by Cisco, Facebook, Cloudflare, and Mozilla in 2022 under the title Delegated Credentials for (D)TLS draft-ietf-tls-subcerts-15 (https://datatracker.ietf.org/doc/html/draft-ietf-tls-subcerts-15, accessed on 15 December 2023). Under their proposal operators were enabled to delegate their own credentials for use in TLS and DTLS. A drawback to this solution is that it creates a new form of digital certificate, a *Delegate Credential (DC).* Checking validity of such a credential requires an extension to implementations of the X.509 standard, i.e., modification to browser installations.

U.S. Patent 11533185 issued to Sharma et al. and entitled "Systems and method for generating and managing certificate authorities" describes another centralized approach for managing subordinate certificate authorities. In this patent, a technology is presented that provides a user interface wrapping on the mechanism for creating certificate authorities. The resulting structure, however, is much like the centralized PKI approach for managing subordinate certificate authorities and therefore places a large burden on the PKI and management of the PKI.

From the foregoing it is apparent that there is a need for an improved method to restrict the power of subordinate certificate authorities without requiring a burdensome PKI infrastructure or modification to existing technology such as browsers.

### SUMMARY

The present technology provides a mechanism to restrict the power of subordinate certificate authorities without requiring burdensome PKI infrastructure or requiring modification to existing technology by operating a certificate authority to generate binary code for subordinate certificate authorities with restricted capabilities.

The present technology includes according to a first aspect a method for operating a root certificate authority to create a subordinate certificate authority binary with restricted capability for issuing digital certificates by generating a secret key and associating the secret key with a subordinate certificate authority, creating at least one signature function to digitally sign digital certificates to be issued; and inserting the secret key, the at least one signature function into a subordinate certificate authority binary.

In an aspect, the technology includes defining in the subordinate certificate authority binary at least one security constraint to restrict an issuance of digital certificates signed by the subordinate certificate authority using the at least one signature function.

In an aspect, the subordinate certificate authority binary is protected using a defined protection scheme, for example, at least one of whitebox encryption, code scrambling, obfuscation, that the secret key may not be retrieved or used outside of defined constraints, verification of binary integrity, and application of security constraints.

In a further aspect, the technology includes associating the subordinate certificate authority with a subordinate certificate authority hostname and wherein the at least one defined security constraint requires that any digital certificate issued by the subordinate certificate authority is for a target domain within a defined hierarchy of the subordinate certificate authority host name, or alternatively, associating the subordinate certificate authority with an allowed hostname pattern and wherein the at least one defined security constraint requires that any digital certificate issued by the subordinate certificate authority is for a domain with a hostname satisfying the allowed hostname pattern associated with the subordinate certificate authority.

The target hostname may be for example a domain name, a fully qualified domain name, a TLS distinguished name, or an IP address.

In a further aspect, the at least one defined security constraint requires that any digital certificate issued by the subordinate certificate authority is for a domain that is a leaf.

In an alternative, the technology further includes the root certificate authority digitally signing a digital certificate for the subordinate certificate authority binary wherein the subordinate certificate authority binary comprises instructions to digitally sign digital certificates using the digital certificate of the subordinate certificate authority.

In an aspect, the technology further includes setting the subordinate certificate authority digital certificate to expire based on the expected secure period for protecting the subordinate certificate authority binary using a protection scheme including at least one of whitebox encryption, code scrambling, and obfuscation.

In a further aspect, the technology includes setting any digital certificates issued by the subordinate certificate authority to expire no later than the expiration of the digital certificate of the subordinate certificate authority based on the expected secure period for protecting the subordinate certificate authority binary using a protection scheme including at least one of whitebox encryption, code scrambling, and obfuscation.

In an aspect, the technology includes operating a server receiving, loading, and executing a subordinate certificate authority binary created as described herein to create a digital certificate for a domain.

In another aspect, the technology includes a non-transitory computer readable memory comprising a subordinate certificate authority creation program executable by a root certificate authority to create a subordinate certificate authority binary according to the method according to the first aspect.

In another aspect, the technology includes a non-transitory computer readable memory comprising a subordinate certificate authority binary executable by a subordinate certificate authority, including instructions to determine whether issuance of a digital certificate satisfies a defined security constraint and to create a digital certificate for an entity or server if such issuance of a digital certificate satisfies the defined security constraint.

In an aspect, the subordinate certificate authority binary is created according to the method according to the first aspect.

In an aspect, the technology includes a method of operating subordinate certificate authority by utilizing a subordinate certificate authority binary created according to the method according to the first aspect to prior to issuing a digital certificate signed by the subordinate certificate authority, determining whether the at least one defined security constraint is or is not satisfied, and issuing a digital certificate signed by the subordinate certificate authority using the at least one signature function only if the at least one defined security constraint is successfully satisfied.

Other aspects and advantages of the present invention will become apparent from the following detailed description, taken in conjunction with the accompanying drawings, illustrating by way of example the principles of the invention.

### BRIEF DESCRIPTION OF THE DRAWINGS

FIG. 1 is a simplified network diagram illustrating a user using a client computer to interact with a service provider server, hosted on a service provider server computer, over the Internet.
FIG. 2 is an illustration of a simplified view of a web browser window displaying a certificate of trust hierarchy.
FIG. 3 is a schematic illustrating server instances distributed over multiple regions.
FIG. 4 illustrates a possible arrangement of certificate authorities and intermediate certificate authorities addressing multiple server instances in multiple regions.
FIG. 5 is a block diagram illustrating a hardware architecture for a Root CA of FIG. 1.
FIG. 6 is a schematic diagram illustrating programs and data that may be loaded onto the non-volatile storage of a Root CA computer of FIG. 5.
FIG. 7 is a block diagram illustrating dataflow for the Sub CA generator of FIG. 6.
FIG. 8 is a flowchart illustrating the process by which the Sub CA generator of FIGs. 6 and 7 creates a digital certificate issuer binary for a Sub CA of FIG. 1.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The herein described technology provides a mechanism by which a certificate authority may restrictively delegate its authority for issuing digital certificates to subordinate certificate authorities. The mechanism avoids placing a large administrative burden on a centralized PKI system and on human operators of such a system while placing restrictions on the ability of the generated subordinate certificate authority to issue digital certificates.

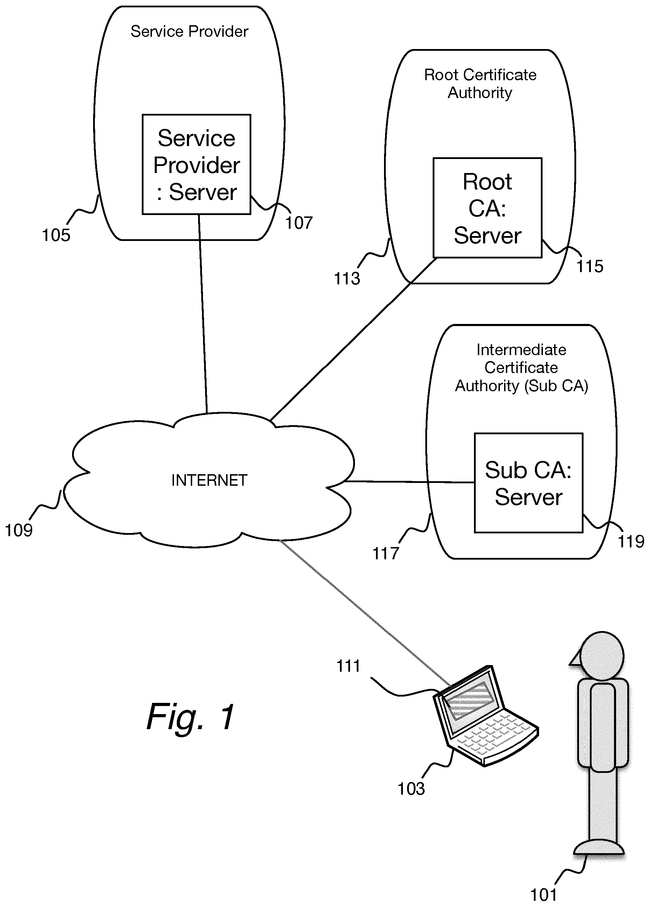

FIG. 1 is a simplified network diagram illustrating a user 101 using a client computer 103 to interact with a service provider server 107, hosted on a service provider server computer 105, over the Internet 109.

Consider, for example, that the service provider is a bank and the user is a bank customer. To create a secure channel, the user 101, the client computer 103 and the bank server 107 execute the following steps:
The user 101 wants to access their bank account, so they open a browser (illustrated as browser window 111) and connect to the bank server 107 over the Internet 109.

To establish a secure connection, the user's browser initiates a TLS handshake with the bank server 107 by sending a "Client Hello" message over the Internet 109. This specifies versions of TLS supported by the browser.

The bank server 107 responds with a "Server Hello" that chooses the TLS version for the session. The bank server 107 sends its public key certificate for authentication purposes.

The user's browser validates the certificate and engages in a key-exchange mechanism with the service provider server 107 involving it's key pair and the key pair of the bank to generate a shared symmetric session key to use for the TLS channel.

With the secure TLS channel established between the user's browser and bank 107 over the Internet 105, sensitive information like financial transactions can be securely exchanged. Data stays safe from potential eavesdropping.

However, the user also should be able to rely on that the public key presented to it is indeed from the bank. To do so, the browser (illustrated as browser window 111) running on the client computer and the server 107 execute the following steps:
The certificate sent by the bank server contains information about the owner (common name, organization details etc.) as well as the certificate authority that issued/signed the certificate.

The user's browser maintains a pre-installed list of trusted certificate authorities in its trusted root certificate store. This is usually certificate authorities that major browsers trust by default.

When the bank certificate arrives, the user's browser checks whether the certificate is properly signed by any certificate authority present in the browser's trusted store. This verifies that the certificate is valid and authentic.

Additionally, the browser would validate that the common name/details in the bank certificate matches the intended server the user is trying to connect to (e.g the domain - the bank.com), preventing spoofed certificates.

If both the issuer authentication and domain details check out successfully, the user's browser would trust the legitimacy of the bank certificate and the connection to the bank server 107.

By validating the TLS server certificate this way, the user's browser 111 can authenticate the identity of bank server 107 and encrypt data by securely sharing keys to establish the TLS protected channel.

The digital certificates are issued by issuing certificate authorities (CAs). These certificate authorities may be either Root CAs 113 operating Root CA servers 115 or Intermediate CAs (Sub CAs) 117 operating Sub CA servers 119, which are also connected to the Internet 109, respectively. Alternatively, CAs may operate offline in the issuance of digital certificates.

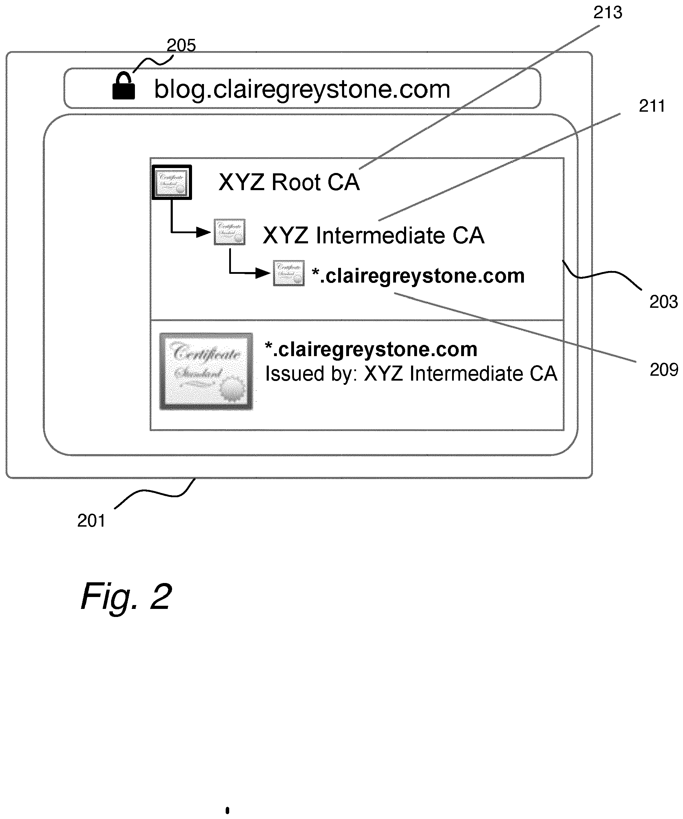

FIG. 2 is an illustration of a simplified view of a web browser window 201 displaying a certificate of trust hierarchy 203. A user 101 is using their web browser 111 to access a service provider url, here "blog.clairegreystone.com". The padlock icon 205 indicates that blog.clairegreystone.com is a secure website. By clicking on the padlock 205, the hierarchy 203 is displayed.

Furthermore, the display confirms that *.clairegreystone.com has a digital certificate 209 associated therewith. The hierarchy indicates that the digital certificate 209 of *.clairegreystone.com has been signed by an intermediate certificate authority 211, XYZ Intermediate CA, and that the digital certificate of the intermediate certificate authority XYZ has been signed by a root certificate authority 213, XYZ Root CA.

To verify the digital certificate 209 of *.clairegreystone.com, the browser (illustrated in Fig. 1 using browser window 111) traverses the hierarchy 203 and verifies the root certificate against a trusted root certificate stored locally on the client computer 103, i.e., the user's computer where the browser is execution.

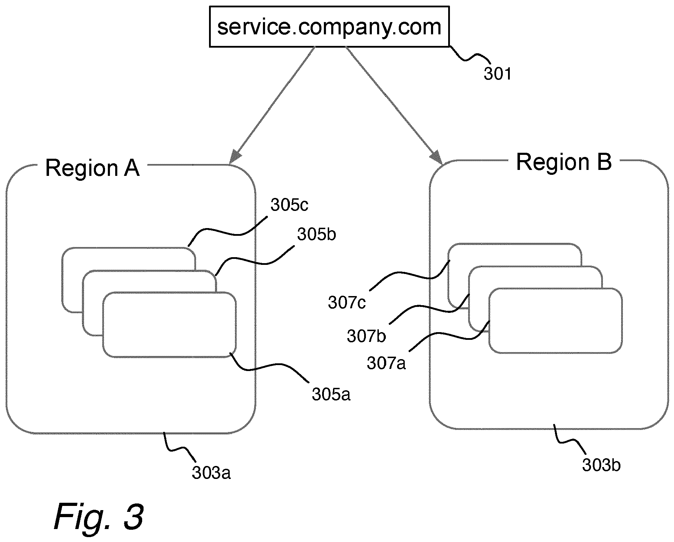

A service company may operate many instances of a web server distributed over many regions. These webservers instances may either share public/private key pairs or have their own unique key pairs. Alternatively, key pairs may be shared by instances located in one region. FIG. 3 illustrates this distribution of server instances. In this example, a service company 301, service.company.com, operates in two regions, Region A 303a and Region B 303b. Each region has multiple server instances, e.g., 305a-c and 307a-c.

For these various instances to be able to prove the authenticity of their respective public keys, each must have a digital certificate issued by a legitimate certificate authority.

A user accessing service.company.com maybe serviced by any of the instances 305a-c if in Region A or any of instances 307a-c if in Region B.

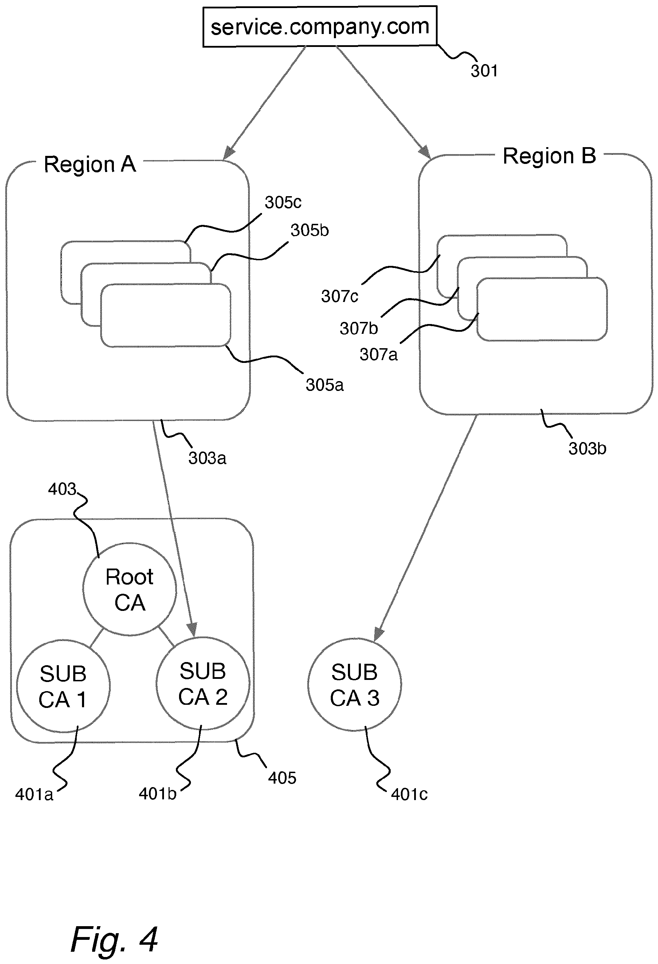

FIG. 4 illustrates a possible arrangement of certificate authorities and intermediate certificate authorities addressing the aforementioned requirement.

Each of three Sub CAs 401 may issue digital certificates having been delegated that authority from the Root CA 403. As illustrated with respect to Sub CAs 401a and 401b, Sub CAs maybe administratively linked to a Root CA 403 in some common structure 405. However, other Sub CAs, e.g., Sub CA 401c may operate quite independently from the Root CA 403 and the issuing entity.

As an example, Sub CA 401a and 401b may receive certificate signing requests from server instances 305 located in Region A whereas independent Sub CA 401c may receive certificate signing requests from server instances 307 located in Region B.

In the prior art, each of the Sub CAs have the same certificate granting authority as the Root CA; to efficiently manage the structure, a central PKI must provide a very high service availability to address dynamic service scaling; independent Sub CAs are difficult to manage and is a security risk in that it may not be managed according to desired security policies. Furthermore, in many cases it is not actually necessary for Sub CAs to have the same level of certificate issuance authority as the Root CA.

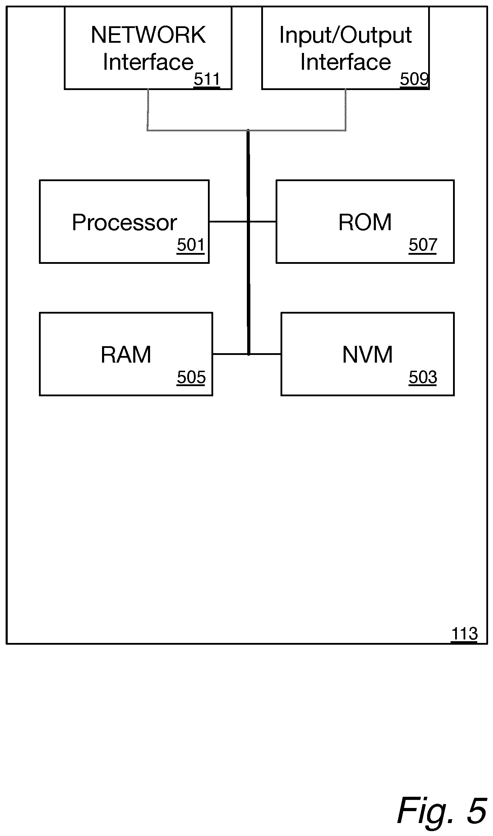

FIG. 5 is a block diagram illustrating a hardware architecture for a Root CA 113. A Root CA computer 113 may include a processor 501 for executing programs, such as a Root CA server 115 for issuing digital certificates, a non-volatile storage 503 for storing programs and data, a RAM 505 for temporarily storing of programs and data while executing programs, and a ROM 507 for storing firmware etc. The Root CA computer 113 may also include an input/output interface 509 for interacting with, for example, an operator, and a network interface 511 for connecting to the Internet 109.

The non-volatile storage 503 may be any combination of non-volatile memory (NVM), local disk drives, and cloud storage. Thus, the non-volatile storage 503 may not strictly be *within* the bounds of the Root CA computer 113 as illustrated in FIG. 5.

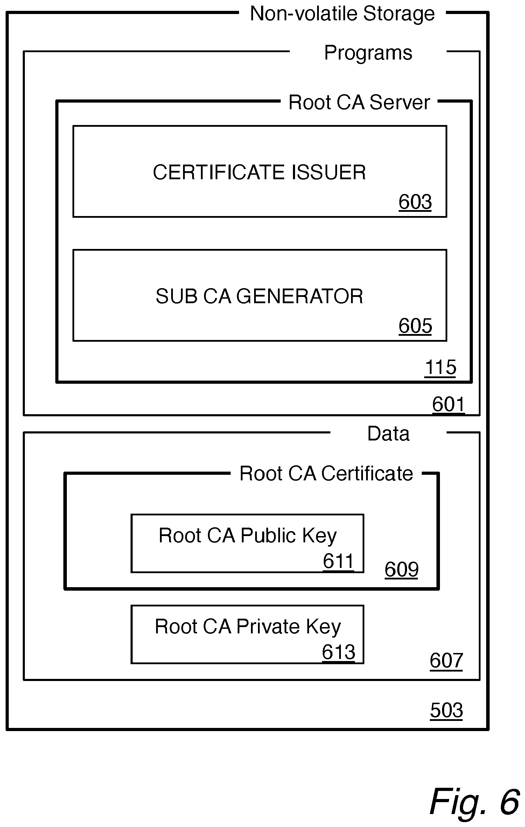

FIG. 6 is a schematic diagram illustrating programs 601 that may be loaded onto the non-volatile storage 503 of a Root CA computer 113. These programs 601 include instructions executable by the processor to perform certain defined tasks and may include a Root CA server 115 including a digital certificate issuer 603 and a Sub CA generator 605.

The non-volatile storage 503 also contains data 607 including a digital certificate 609 for the Root CA, which includes the public key 611 of the Root CA, and the private key 613 of the Root CA. Together the public key 611 and the private key 613 form the keypair for the Root CA.

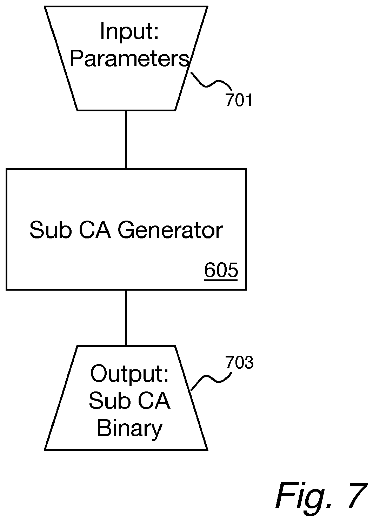

FIG. 7 is a block diagram illustrating dataflow for the Sub CA generator 605. The Sub CA generator 605 accepts some input parameters 701. The input parameters 701 may include a request to generate a Sub CA server 119. The request may define items such as common name of service provider for which the Sub CA is to issue digital certificates. The input parameters 701 may further include definitions of security constraints (policies) that are to be enforced by a generated Sub CA server 119. In the discussion that follows, a target host is a host for which the Sub CA operates to issue and sign a digital certificate. The security constraints may include restrictions limiting the target hosts to which the Sub CA may issue digital certificates. In the following, the target host is associated with a target host name and the target host name may for example be a domain name, a fully qualified domain name, a TLS distinguished name (DN), or an IP address. The security constraints include:
- that target host has the same TLS common name as the Sub CAs parent service provider or
- that the target host name must belong to a specified hierarchy of the subordinate certificate authority, such as being an instance of a defined parent
- that a target host name must fit an allowed hostname pattern associated with the subordinate certificate authority
- that issued certificates may be restricted to leaf nodes
- the issued certificates have a specified limited validity period and expire after that limited validity period, for example, the validity period may be set to expire no later than the expiration of the digital certificate of the subordinate certificate authority, which may be based on the expected secure period for protecting the subordinate certificate authority binary using a protection scheme including at least one of whitebox encryption, code scrambling, and obfuscation
- that the Sub CA can only use its digital certificate for limited purposes, e.g., to issue digital certificates according to other defined constraints, but cannot use its private and public keys for encryption and decryption purposes
- that the Sub CA engages in a prescribed authentication scheme with any entity that uses it to issue a digital certificate.

The output of the Sub CA generator 605 is an executable binary 703 that operates to generate digital certificates. The digital certificate issuer binary 703 embeds the security constraints (policies) defined as input parameters within the executable code that makes up the digital certificate issuer binary 703.

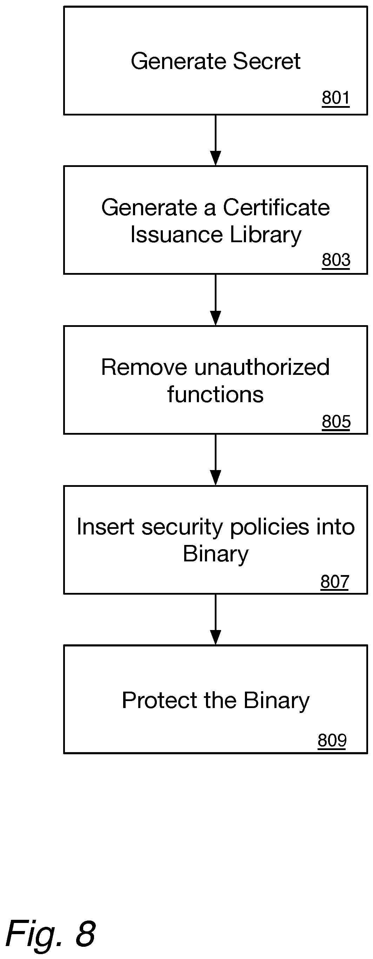

FIG. 8 is a flowchart illustrating the process by which the Sub CA generator 605 creates a digital certificate issuer binary 703.

Step 801: The Sub CA generator 605 generates a secret key dedicated to the Sub CA server binary being generated. The secret key may be part of key pair having a public key and private key.

Step 803: The Sub CA generator 605 creates a certificate issuance library for use with the generated secret key. While in many applications the power of the Sub CA is restricted to only issuing digital certificates, i.e., the ability to sign digital certificate including the public key of the entity, a certificate issuance library may contain at least one or several functions for encryption, decryption, and digital signature.

In an embodiment, the secret key is embedded into the certificate issuance library within the Sub CA server binary being generated.

Step 805: The Sub CA generator 605 strips away any cryptography functions that the generated Sub CA server binary is not authorized to perform using the generated secret key. In an alternative embodiment, these functions are not installed into the binary in Step 803. However, in alternative embodiments, a template certificate issuance library that includes multiple cryptography functions may be used in Step 803; thus, stripping away any undesired functions may be required.

The functions that are to be stripped away maybe defined by an input parameter 701 or maybe hardcoded in the Sub CA generator 605.

Step 807: The Sub CA generator 605 may insert security constraint (policy) enforcing code. The security policies maybe, as described hereinabove, be an input parameter 701 or maybe hardcoded in the Sub CA generator. The binary is thus generated to include instructions to enforce the security policies including the security policies listed above such as limiting issuance of digital certificates to certain common names and ensuring that certificates only have a limited validity period, for example, limited to one calendar day or even a few hours.

Step 809: The Sub CA generator 605 may protect the Sub CA server binary 703 using a defined protection scheme such as whitebox encryption, code scrambling, and obfuscation, that the secret key may not be retrieved or used outside of defined constraints, verification of binary integrity, and application of constraints. Such techniques are known in the art and outside the scope of this disclosure.

The Sub CA generator 605 may package the Sub CA server binary 703 for issuance of the Sub CA for installation into a Sub CA computer 117 as an executable Sub CA server 119. The Sub CA binary thus contains instructions that enable the Sub CA computer to serve certificate signing requests (CSR) while adhering to predefined security policies that restrict the Sub CA when issuing digital certificates, for example, to ensure that such issued digital certificates are only within an intended domain.

In an embodiment, the generated Sub CA binary 703 is used in conjunction with the issuance of TLS digital certificates for use in establishing secure TLS communication channels between clients and servers, for example, as illustrated in FIG. 1 and discussed in conjunction therewith. However, digital certificates are used in other contexts. The techniques described herein may be adapted to such other contexts.

The thus created Sub CA binary 703 may then be transmitted to a Sub CA server 119 for creating and digitally signing digital certificates. Accordingly, the Sub CA binary 703 is restricted by the security policies incorporated therein by the issuing Root CA.

The herein described technology provides a decentralized solution for issuing digital certificates. The solution provides for light-weight Sub CA servers that have a restricted certificate issuance module rather than a full-blown Sub CA. Such a restricted Sub CA presents a much lower security risk as it is restricted to security policy compliance and is restricted to issue only digital certificates within a small context, i.e., with one domain, for a specified common name (CN), or a specified distinguished name (DN).

Furthermore, the issuance authority may be restricted to a short period and issued digital certificates may be restricted to a similarly short period.

While TLS is used as an illustrative example for the application of the herein-described technology, it may be applied advantageously in many other uses. For example, event ticketing and Internet-of-Things (IoT) device factories.

In event ticketing, for example, a certificate authority may issue digital certificates to each attendee during ticket purchasing. Because of high traffic volume during ticket issuance, relying on a centralized PKI structure to create certificates may be impractical. In such a situation, delegation to Sub CAs is desirable.

In the loT factory example, the factory could - in a secure zone - embed a shared key into each of its devices and issue a corresponding digital certificate attesting to the device identity. Assuming a high volume, e.g., thousands of devices per minute, a traditional centralized PKI would easily be overwhelmed. Accordingly, the Sub CA paradigm may be deployed to handle this high volume of digital certificate issuance.

In both cases, the disadvantages with unrestricted Sub CAs would be a concern. Therefore, the techniques described above may be deployed to address such concerns by imposing security policies on the issuance of digital certificates by the Sub CAs charged with issuing attendee digital certificates or loT device digital certificates by having such restrictions embedded into the binary code of the Sub CA.

From the foregoing it is apparent that an efficient and secure mechanism for restricting the power to issue digital certificates by intermediate certificate authorities (Sub CAs) is provided.

Although specific embodiments of the invention have been described and illustrated, the invention is not to be limited to the specific forms or arrangements of parts so described and illustrated. The invention is limited only by the claims.

## Claims

1. A method for operating a root certificate authority (113) to create a subordinate certificate authority binary (703) with restricted capability for issuing digital certificates, the method comprising:
generating (801) a secret key and associating the secret key with a subordinate certificate authority;
creating (803) at least one signature function to digitally sign digital certificates to be issued; and
inserting (803) the secret key, the at least one signature function into a subordinate certificate authority binary.

2. The method of Claim 1, further comprising:
defining (807) in the subordinate certificate authority binary at least one security constraint to restrict an issuance of digital certificates signed by the subordinate certificate authority using the at least one signature function.

3. The method of Claim 1 or Claim 2, further comprising (809):
protecting the subordinate certificate authority binary using a defined protection scheme.

4. The method of Claim 3 wherein the defined protection scheme includes at least one of whitebox encryption, code scrambling, obfuscation, that the secret key may not be retrieved or used outside of defined constraints, verification of binary integrity, and application of security constraints.

5. The method of Claim 2, further comprising associating the subordinate certificate authority with a subordinate certificate authority hostname and wherein the at least one defined security constraint requires that any digital certificate issued by the subordinate certificate authority is for a target domain within a defined hierarchy of the subordinate certificate authority host name.

6. The method of Claim 5, further comprising associating the subordinate certificate authority with an allowed hostname pattern and wherein the at least one defined security constraint requires that any digital certificate issued by the subordinate certificate authority is for a domain with a hostname satisfying the allowed hostname pattern associated with the subordinate certificate authority.

7. The method of Claim 5 or Claim 6 wherein the target hostname is a domain name, a fully qualified domain name, a TLS distinguished name, or an IP address.

8. The method of Claim 2, wherein the at least one defined security constraint requires that any digital certificate issued by the subordinate certificate authority is for a domain that is a leaf.

9. The method of Claim 1, further comprising the root certificate authority digitally signing a digital certificate for the subordinate certificate authority binary wherein the subordinate certificate authority binary comprises instructions to digitally sign digital certificates using the digital certificate of the subordinate certificate authority.

10. The method of Claim 9 further comprising setting the subordinate certificate authority digital certificate to expire based on the expected secure period for protecting the subordinate certificate authority binary using a protection scheme including at least one of whitebox encryption, code scrambling, and obfuscation.

11. The method of Claim 10 further comprising setting any digital certificates issued by the subordinate certificate authority to expire no later than the expiration of the digital certificate of the subordinate certificate authority based on the expected secure period for protecting the subordinate certificate authority binary using a protection scheme including at least one of whitebox encryption, code scrambling, and obfuscation.

12. A non-transitory computer readable memory comprising a subordinate certificate authority creation program executable by a root certificate authority to create a subordinate certificate authority binary according to the method of any of claims 1 through 11.

13. A non-transitory computer readable memory comprising a subordinate certificate authority binary executable by a subordinate certificate authority, including instructions to:
determine whether issuance of a digital certificate satisfies a defined security constraint; and
create a digital certificate for an entity or server if such issuance of a digital certificate satisfies the defined security constraint.

14. The non-transitory computer readable memory of Claim 13 wherein the subordinate certificate authority binary is created according to the method of any of Claims 1 through 11.

15. A method of operating subordinate certificate authority, comprising:
utilizing a subordinate certificate authority binary created according to any of claims 1 through 11 to:
prior to issuing a digital certificate signed by the subordinate certificate authority, determining whether the at least one defined security constraint is or is not satisfied; and
issuing a digital certificate signed by the subordinate certificate authority using the at least one signature function only if the at least one defined security constraint is successfully satisfied.
